# EUROPÄISCHE PATENTANMELDUNG

(11) **EP 2 295 826 A2**
(43) Veröffentlichungstag der Anmeldung: **16.03.2011**
(21) Anmeldenummer: 10175524.7
(22) Anmeldetag: 07.09.2010
(51) Int. Cl.: F16F 1/02, F16F 1/366

(54) **Kunststofffeder für ein Kraftfahrzeugfahrwerk**

(30) Priorität: 09.09.2009 DE 102009029300
(71) Anmelder: ZF Friedrichshafen AG, 88038 Friedrichshafen (DE); Leichtbau-Zentrum Sachsen GmbH, 01307 Dresden (DE)
(72) Erfinder: Marquar, Hendrik, 97422 Schweinfurt (DE); Schuler, Manfred, 97456 Dittelbrunn (DE); Renn, Josef, 97337 Dettelbach (DE); Stretz, Klaus, 97437 Haßfurt (DE); Sundermann, Karin, 97526 Sennfeld (DE); Zutzmann, Michael, 97424 Schweinfurt (DE); Hufenbach, Werner, 01324 Dresden (DE); Lepper, Martin, 01279 Dresden (DE); Werner, Jens, 01640 Coswig (DE); Köhler, Christian, 01099 Dresden (DE)

(57) **Zusammenfassung**

Kunststofffeder (1), umfassend einen Wellrohrkörper (3) mit endseitigen Anschlussflächen (5,7) zur Kraftübertragung zwischen zwei relativ zueinander beweglichen Bauteilen (9,11), wobei eine Anschlussfläche (5) der Kunststofffeder als ein Rohrkörper ausgeführt ist, der in einen Topfelement (17) eines der tragenden Bauteilen eingreift, wobei das Topfelement mit einer Verdrängermasse füllbar ist und dadurch der Rohrkärper innerhalb des Topfelements eine Verschiebebewegung zur axialen Einstellung der Vorspannung der Kunststofffeder ausführt.

## Beschreibung

Die Erfindung betrifft eine Kunststofffeder gemäß dem Oberbegriff von Patentanspruch 1.

Aus der DE-AS 1 009 500 ist ein Federungshohlkörper aus Gummi oder elastischem Kunststoff zum Auffangen von Stößen bei Fahrzeugen bekannt. Dabei handelt es sich um einen zylindrischen Hohlkörper mit endseitigen Anschlüssen. Diese endseitigen Anschlüsse verhindern eine Anordnung, bei der ein Schwingungsdämpfer koaxial zur Feder montiert ist.

Die GB 698 322 betrifft einen Federungshohlkörper aus Gummi, der zwischen zwei Federtellern axial verspannt ist. Ein erster Federteller ist an einem Zylinder und ein zweiter Federteller an einer zentralen Stange der Federungseinrichtung befestigt. Der Federungshohlkörper liegt radial an der Kolbenstange an, so dass bei jeder Federungsbewegung Reibungskräfte zwischen der Kolbenstange und dem Federungshohlkörper auftreten.

Aus der DE 1 655 642 A1 ist ein Federelement zur Abfederung von Fahrzeugaufbauten bekannt. Dieses Federelement weißt ein Wellrohrprofil auf und besteht aus einem faserverstärkten Kunststoff. Endseitig ist das Federelement druckdicht verspannt.

In diesem Zusammenhang ist noch die DE 23 40 917 A1 zu nennen, die ebenfalls ein Federelement aus Kunststoff offenbart. Im Gegensatz zum Federelement gemäß der DE 1 655 642 wird jedoch keine Druckgasfüllung verwendet, so dass eine einfache stirnseitige Anlagefläche zur Übernahme der Traglast ausreicht. Bei einer Kompression des Federelements kann die in dem Federelement enthaltene Luftfüllung über mindestens eine Öffnung ventilieren.

Aus der DE 101 44 163 C1 ist ein Federbein mit einem höheneinstellbaren Federteller bekannt. Der Federteller verfügt über einen Hülsenabschnitt, der in eine zylinderseitige Kammer angeordnet ist. Durch die Befüllung der Kammer wird der Hülsenabschnitt in der Kammer axial verschoben und damit die Vorspannung einer Schraubendruckfeder verändert. Der Federteller besteht aus einem metallischen Werkstoff, wobei der Hülsenabschnitt aus einer Platine mittels Tiefziehen geformt ist. Dadurch ist die nutzbare Länge des Hülsenabschnitts leider eingeschränkt.

Trotz des schon langen Bekanntheitszeitraums der beschriebenen Federelemente konnte sich diese Bauform insbesondere im Fahrzeugbau nicht durchsetzen.

Die Aufgabe der vorliegenden Erfindung ist es eine Kunststofffeder derart weiterzuentwickeln, so dass ein Einsatz in einem Fahrzeug großseriengerecht möglich ist.

Erfindungsgemäß wird die Aufgabe dadurch gelöst, dass eine Anschlussfläche der Kunststofffeder als ein Rohrkörper ausgeführt ist, der in einen Topfelement eines der tragenden Bauteilen eingreift, wobei das Topfelement mit einer Verdrängermasse füllbar ist und dadurch der Rohrkörper innerhalb des Topfelements eine Verschiebebewegung zur axialen Einstellung der Vorspannung der Kunststofffeder ausführt.

Als Verdrängermasse wird bevorzugt Kunststoff verwendet. Diese Verdrängermasse verbindet sich leicht mit dem Rohrkörper, so dass eine dauerhafte auch verdrehgesicherte Verbindung zwischen der Feder und dem Topfelement des tragenden Bauteils besteht.

Der Rohrkörper ist bevorzugt einteilig mit dem Wellrohrl<örper ausgeführt. Der große Vorteil der Erfindung besteht darin, dass ein Federteller in klassische Bauweise wie bei einer Schraubendruckfeder entfallen kann. Bei vielen Anwendungen muss die Feder exakt auf einem Federteller platziert sein. Durch die Einteiligkeit des Rohrkörpers mit dem federnden Abschnitt der Kunststofffeder ist stets die korrekte Einbaulage und Positionierung der Feder gewährleistet.

In weiterer vorteilhafter Ausgestaltung ist das Topfelement Bestandteil eines äußeren Zylinders eines Federbeins, wobei der Zylinder ebenfalls aus Kunststoff besteht. Damit kann eine vollständige Kunststoffkette zwischen der Feder und dem Zylinder erreicht werden.

Gemäß einem vorteilhaften Unteranspruch die Kunststofffeder eine axial verlaufende Faserarmierung aufweist, deren Faserlänge im Wesentlichen dem axialen Abstand zwischen den Anschlussflächen entspricht.

Streng genommen wird die Federwirkung der Kunststofffeder nicht von den Kunststoffanteiien bestimmt, sondern von der Faserarmierung. Die Kunststoffanteiie üben eine Kleberfunktion zwischen den Fäden der Armierung aus. Des Weiteren verschließen die Kunststoffanteiie die Zwischenräume innerhalb der Faserarmierung, so dass die Kunststofffeder einen Schutz gegen Schmutz darstellt.

Dabei ist vorgesehen, dass zumindest 50% der axial verlaufenden Fasern eine Winkelabweichung von weniger als 30^{°} zur Längsachse der Kunststofffeder aufweisen.

In weiterer vorteilhafter Ausgestaltung weist die Kunststofffeder eine in Umfangsrichtung verlaufende Faserarmierung auf, wobei die Faserlänge zumindest dem Windungsdurchmesser des Wellrohrkörpers entspricht.

Die Faserarmierung ist onduliert und wird vorzugt von einem Gewebe gebildet. Die Federkennlinie der Kunststofffeder kann deshalb durch die Variation verschiedener Parameter verändert werden. Zum einen durch das Volumen und die Gestaltung des Wellrohrkörpers, z. B. hinsichtlich der Wandstärke und der Abmessung des Wellprofils. Andererseits kann auch durch die Faserarmierung auf die Federkennlinie Einfluss genommen werden, z.B. durch die Anzahl der Armierungslagen, durch den Fadenlauf oder die Materialauswahl.

Des Weiteren kann vorgesehen sein, dass eine Anschlussfläche als ein Axiallager ausgeführt ist. Bei einer Anwendung, bei der das tragende und das zutragende Bauteil eine rotatorische Relativbewegung zueinander ausführen, kann die Kunststofffeder als Träger für das Axiallager dienen. Ein separates Bauteil, das gesondert eingepasst werden muss, z. B. um ein Lagerspiel einzuhalten, ist nicht notwendig.

So kann die Anschlussfläche eine Ringnut zur Aufnahme eines Lagerrings aufweisen. Der Lagerring bildet eine mögliche Bauform eines Gleitlagers.

Alternativ besteht die Möglichkeit, dass die Anschlussfläche eine Rollenlagerung aufweist.

Bei einer besonders einfachen Variante der Lagerung im Bereich der Anschlussfläche weist eine Ringnut eine Schmierstofffüllung auf.

Zusätzlich weist die Anschlussfläche einen Rastmechanismus zur Befestigung mit einem der zueinander beweglichen Bauteile auf. Separate Spannmittel, die die Kunststofffeder an einem der zueinander beweglichen Bauteile fixieren, erübrigen sich damit.

Die Kunststofffeder soll gezielt belüftet werden. Dazu weist die Kunststofffeder mindestens eine Belüftungsöffnung auf, die von einem Rückschlagventil gesteuert wird.

Das Rückschlagventil wird von einem elastischen Ventilkörper gebildet, der in einer Falte des Wellrohrkörpers gelagert ist. Damit bildet der Wellrohrkörper praktisch einen Teil des Rückschlagventils.

Es ist vorgesehen, dass die Belüftungsöffnung in einer Falte des Wellrohrkörpers ausgeführt ist. Wenn die Belüftungsöffnung in den radialverlaufenden ringförmigen Bereichen des Wellrohrkörpers ausgeführt ist, dann ist die Gefahr des seitlichen Schmutzeintrags deutlich minimiert.

Im Hinblick auf einen möglichst einfachen und platzsparenden Ventilkörper weist dieser eine Rinnenform auf, die sich mit ihrem Nutgrund in der Falte abstützt.

Ein Schwingungsdämpfer als eine Patrone kann innerhalb des Zylinders angeordnet sein, wobei zwischen einem Außenzylinder der Patrone und der innenwandung des Zylinders mindestens ein Ventilationskanal vorliegt, der an einen Innenraum der Kunststofffeder angeschlossen ist. Insbesondere in Verbindung mit einem Zylinder aus Kunststoff wird das Problem der Wärmeabfuhr vom Schwingungsdämpfer gelöst.

Der Ventilationskanal weist mindestens eine Anschlussöffnung an die Umgebung des Zylinders auf. Die Kunststofffeder wirkt für den Ventilationskanal wie eine Luftpumpe und fördert damit die beim Betrieb des Schwingungsdämpfers anfallende Wärme aus dem Zylinder.

Des Weiteren kann vorgesehen sein, dass die Kunststofffeder im Betriebszustand der Blocklänge einen Drosselquerschnitt zwischen mindestens zwei benachbarten Falten des Wellrohrkörpers bildet. Neben der Verformungsarbeit der Feder kann zusätzlich noch die Dämpfungsarbeit beim Verdrängen von Luft aus den komprimierten Falten genutzt werden.

In der Wandung des Wellrohrkörpers ist mindestens eine Nut ausgeführt, die zumindest einen Restquerschnitt zwischen einem von einer Falte eingeschlossenen Volumen und einem außerhalb der besagten Falte befindlichen Bereich bestimmt. Der Nutquerschnitt bei Blocklänge bestimmt den wirksamen Drosselquerschnitt.

Im Hinblick auf eine leichte Herstellbarkeit verläuft die Nut bei entspannter Feder im Wesentlichen parallel zur Längsachse.

Zur Dimensionierung der Drosselwirkung kann die mindestens eine Nut an der Innen- und/oder Außenwandung des Wellrohrkörpers ausgeführt sein.

Anhand der folgenden Figurenbeschreibung soll die Erfindung näher erläutert sein.

Es zeigt:
- Fig. 1: Kunststofffeder mit einem Schwingungsdämpfer
- Fig. 2: Detaildarstellung zur Einstellung der Federvorspannung
- Fig. 3: Detaildarstellung zur Anschlussfläche mit Lagerung
- Fig. 4: Schnittdarstellung der Kunststofffeder als Einzelteil
- Fig. 5: Perspektivische Darstellung der Kunststofffeder
- Fig. 6: Kunststofffeder nach Fig. 4 mit geschlossenem Rückschlagventil
- Fig. 7: Detaildarstellung zur Fig. 6
- Fig. 8: Kunststofffeder nach Fig. 4 mit geöffnetem Rückschlagventil
- Fig. 9: Detaildarstellung zur Fig. 8
- Fig. 10 u. 11: Darstellung der Dämpffunktion einer Kunststofffeder

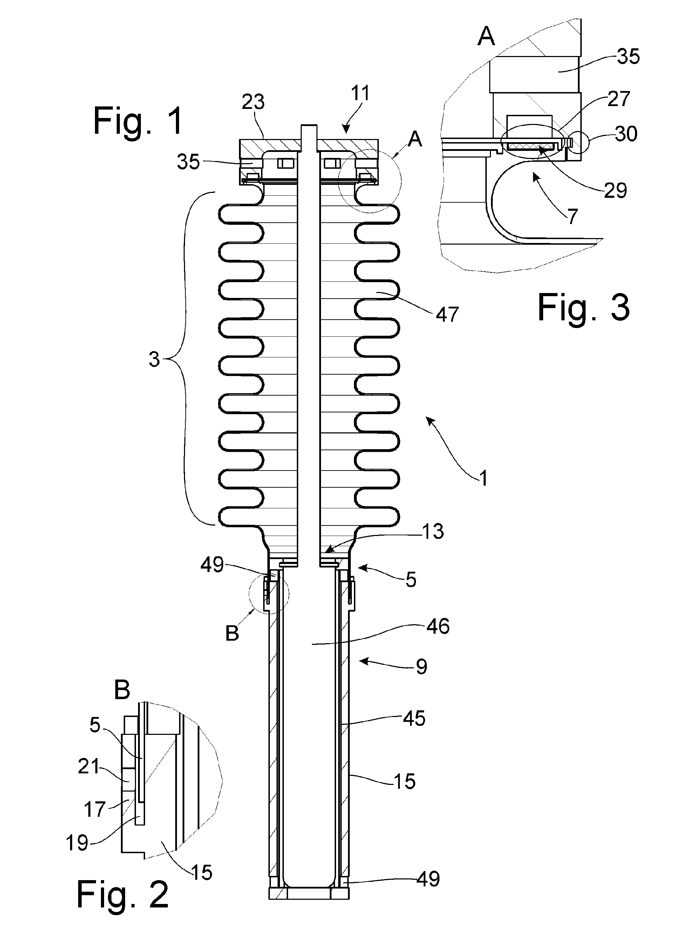

Die Figur 1 zeigt eine Kunststofffeder 1, die einen Wellrohrkörper 3 und endseitige Anschlussflächen 5; 7 zur Kraftübertragung zwischen zwei relativ zueinander beweglichen Bauteilen 9; 11 aufweist. In dieser Darstellung ist die Kunststofffeder 1 mit einem Schwingungsdämpfer 13 in der Ausführung einer Patrone innerhalb eines Zylinders 15 kombiniert, wobei die Kunststofffeder 1 auch bei anderen Anwendungen einsetzbar ist. Die Kunststofffeder 1 weist eine axial verlaufende Faserarmierung 16 auf, deren Faserlänge im Wesentlichen dem axialen Abstand zwischen den Anschlussflächen 5; 7 entspricht.

Zumindest 50% der axial verlaufenden Fasern weisen eine Winkelabweichung von weniger als 30° zur Längsachse der Kunststofffeder auf.

Zusätzlich kann Kunststofffeder eine in Umfangsrichtung verlaufende Faserarmierung 18 aufweisen, wobei die Faserlänge zumindest dem Windungsdurchmesser des Wellrohrkörpers 3 entspricht.

Die Faserarmierungen 16; 18 sind in Gewebeform in der Kunststofffeder eingebettet. Neben ihrer Federfunktion, basierend auf den Faserarmierungen 16; 18, verfügt die Kunststofffeder auch über eine Schutzfunktion für Bauteil und Komponenten, die von ihr abgedeckt eingehüllt werden.

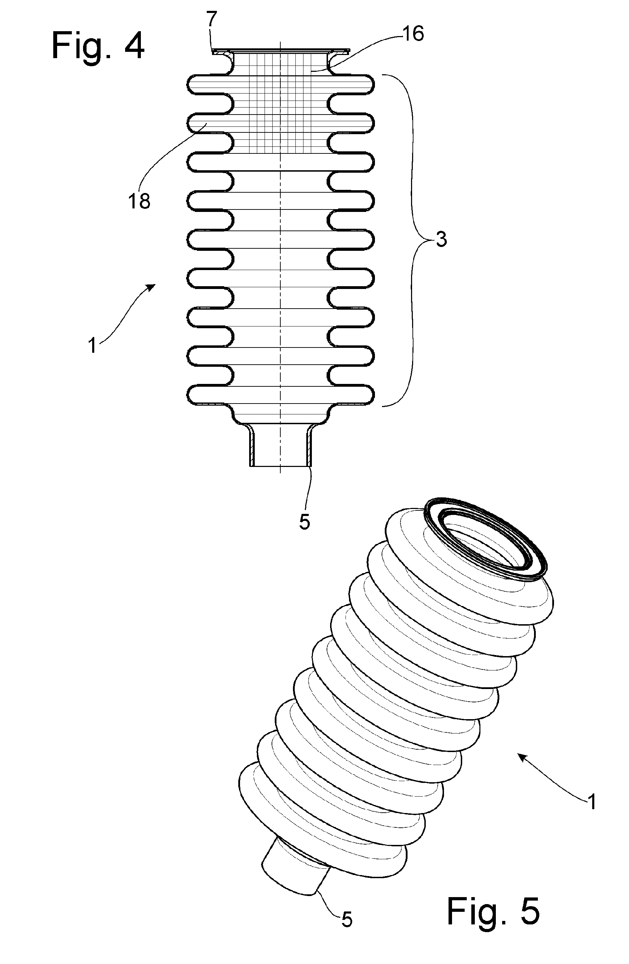

Die Anschlussfläche 5 ist, wie in den Figur 4 und 5 besonders deutlich wird, als ein Rohrkörper ausgeführt. Dieser Rohrkörper 5 greift in ein zylinderseitiges Topfelement 17 ein. Ein Aufnahmeraum 19 des Topfelements 17 kann über mindestens eine Öffnung 21 mit einer urformbaren Verdrängermasse gefüllt werden (Fig. 2). Dadurch führt der Rohrkörper 5 innerhalb des Topfelements 17 eine axiale Verschiebebewegung aus, über die die Vorspannung der Kunststofffeder 1 eingestellt werden kann.

Der Rohrkörper 5 ist einteilig mit dem Wellrohrkörper 3 ausgeführt, so dass insbesondere in der Kombination eines Zylinders 15 , der ebenfalls aus Kunststoff gefertigt ist, eine besonders belastbare Verbindung zwischen den besagten Bauteilen 5, 15 herstellbar ist, die eine unbefugte Demontage der Kunststofffeder 1 wirksam verhindert.

Die Zusammenschau der Figuren 3 und 5 zeigt die zweite Anschlussfläche 7 der Kunststofffeder 1, die mit einem Anschlussorga 23 einer Kolbenstange 25 des Schwingungsdämpfers 13 in Wirkverbindung steht. In der Anschlussfläche 7 ist ein Axiallager 27 ausgeführt. Dafür weist die Anschlussfläche eine Ringnut 29 auf, in der z. B. ein Lagerring 31 oder eine Schmierstofffüllung enthalten ist. Alternativ kann in der Anschlussfläche auch eine Rollenlagerung ausgeführt sein, so dass eine besonders reibungsarme rotatorische Relativbewegung zwischen der Kunststofffeder 1 und dem Anschlussorgan 23 möglich ist. Eine Rastverbindung 30 hält die Kunststofffeder am Anschlussorgan 23.

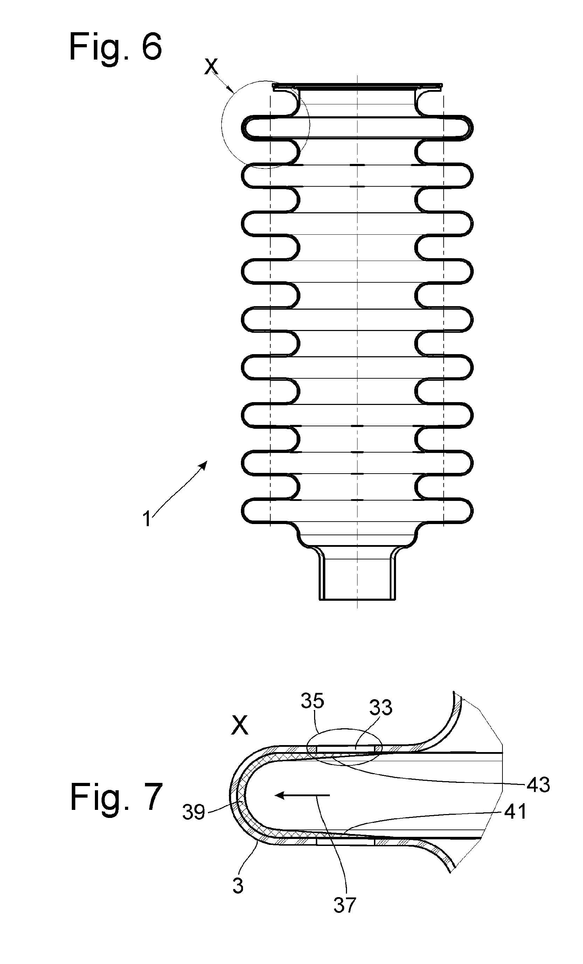

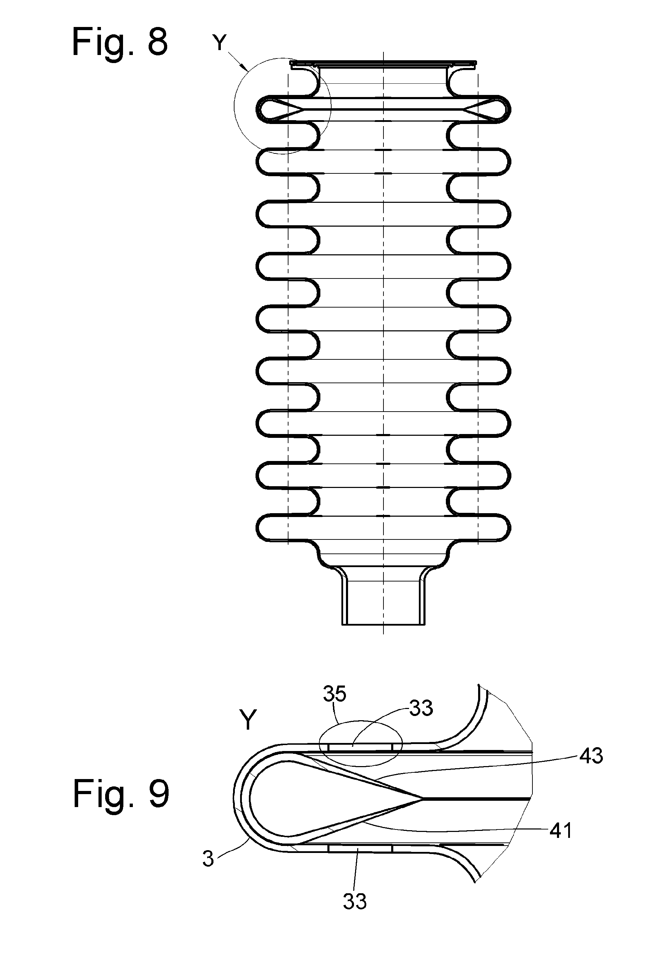

Die Figuren 6 bis 9 zeigen, dass die Kunststofffeder 1 mindestens eine Belüftungsöffnung 33 aufweisen kann, die von einem Rückschlagventil 35 gesteuert wird. Alternativ kann die Belüftungsöffnung 33 auch im Anschlussorgan 23 ausgeführt sein, wie die Figuren 1 und 3 zeigen.

Das Rückschlagventil 35 gemäß den Fig. 6 bis 9 wird von einem elastischen Ventilkörper 37gebildet, der in einer Falte des Wellrohrkörpers 3 gelagert ist. Der Ventilkörper 37 weist eine Rinnenform auf, die sich mit ihrem Nutgrund 39 in einer Falte des Wellrohrkörpers 3 abstützt. Man kann den Ventilkörper z. B. aus einem längsgeschlitzten Schlauch herstellen, der in oder auf eine Falte gelegt wird. Auch die Belüftungsöffnung 33 ist in einer Falte des Wellrohrkörpers ausgeführt, nämlich in den radial erstreckenden Rippen des Wellrohrkörpers 3.

Bei einem außenseitig auf den Wellkörper aufgelegten Ventil körper heben die Schenkel 41; 43 des rinnenförmigen Ventilkörpers 37 bei einer Kompression des von der äußeren Mantelfläche des Wellkörpers 3 ab und überschüssiges Luftvolumen innerhalb der Kunststofffeder kann über die Belüftungsöffnungen 33 entweichen. Die dargestellte Variante zeigt jedoch eine innenseitige Anordnung des Ventil körpers 37, so dass das überschüssige Luftvolumen bei einer Kompression der Kunststofffeder 1 nicht über die Belüftungsöffnung 33 entweichen kann, sondern in einen Ventilationskanal 45 verdrängt wird, der an einen Innenraum 47 der Kunststofffeder 1 angeschlossen ist. (Fig. 1). Der Ventilationskanal 45 wird von mindestens einem Kanal zwischen einem Außenzylinder, der Patrone 13 und dem Zylinder 15 gebildet, wobei der Zylinder 15 mindestens eine Anschlussöffnung 45 an die äußere Umgebung aufweist. Damit wirkt die Kunststofffeder 1 wie eine Pumpe, die mit dem überschüssigen Luftvolumen die bei einem Schwingungsdämpfer 13 anfallende Wärme aus dem Zylinder 15 abführt. Wenn sich die Kunststofffeder wieder ausdehnt, dann heben die Schenkel 41, 43 von der Innenvvandung des Weil körpers ab, so dass wieder ein Druckausgleich zur Umgebung über die geöffneten Belüftungsöffnungen erfolgen kann.

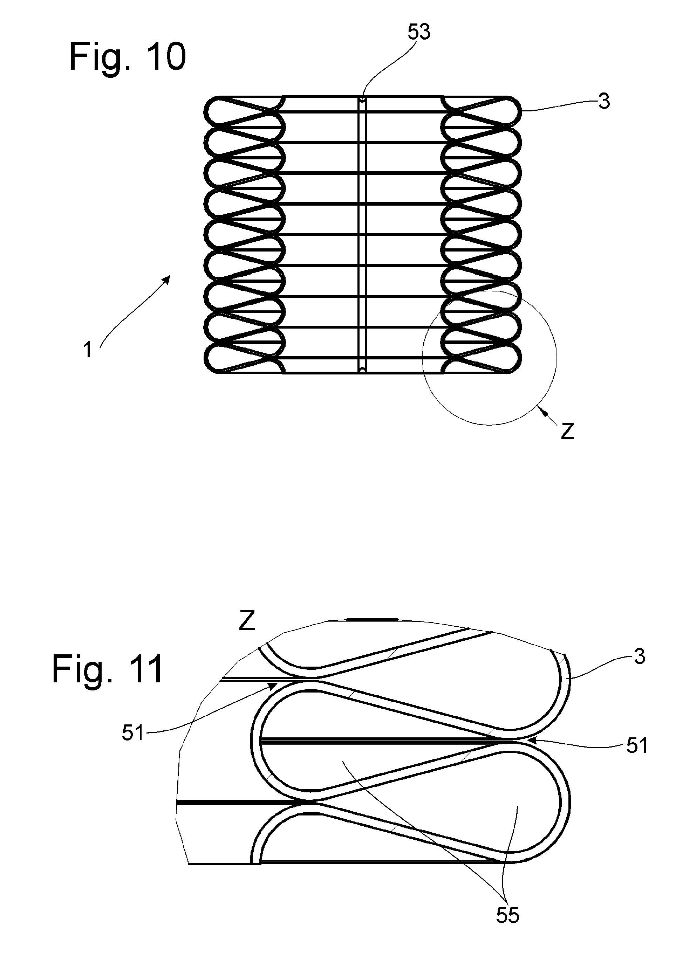

Neben der mechanischen Federwirkung der Kunststofffeder 1 kann bei einer Variante gemäß den Figuren 10 und 11 auch eine Dämpfkraft, erzeugt mit der Kunststofffeder 1, genutzt werden. Dazu bildet die Kunststofffeder 1 im Betriebszustand der Blocklänge, siehe Fig. 10, mindestens einen Drosselquerschnitt 51 zwischen benachbarten Falten des Wellrohrkörpers 3. Ein derartiger Drosselquerschnitt 51 kann z. B. durch mindestens eine Nut 53 gebildet werden, die zumindest einen Restquerschnitt zwischen einem von einer Falte eingeschlossenen Volumen und einem außerhalb der besagten Falte befindlichen Bereich bestimmt werden. Dazu verläuft die Nut bei entspannter Feder im Wesentlichen parallel zur Längsachse der Kunststofffeder. Diese mindestens eine Nut 53 kann an der Innen- wie auch an der Außenwandung des Wellrohrkörpers ausgeführt sein. Wenn die Kunststofffeder über den Kompressionszustand nach Fig. 10 hinaus komprimiert wird, dann wird das innerhalb der Falten eingeschlossene Luftvolumen durch den Drosselquerschnitt 51 verdrängt, wodurch die besagte Dämpfkraft entsteht.

### Bezugszeichenliste

- 1: Kunststofffeder
- 3: Wellrohrkörper
- 5, 7: Anschlussflächen
- 9, 11: bewegliche Bauteile
- 13: Schwingungsdämpfer
- 15: Zylinder
- 16; 18: Faserarmierung
- 17: Topfelelement
- 19: Aufnahmeraum
- 21: Öffnung
- 23: Anschlussorgan
- 25: Kolbenstange
- 27: Axiallager
- 29: Ringnut
- 30: Rastmechanismus
- 31: Lagerring
- 33: Belüfungsöffnung
- 35: Rückschlagventil
- 37: Ventilkörper
- 39: Nutgrund
- 41, 43: Schenkel des Ventilkörpers
- 45: Ventilationskanal
- 46: Außenzylinder
- 47: Innenraum
- 49: Anschlussöffnung
- 51: Drosselquerschnitt
- 53: Nut
- 55: Dämpfvolumen

## Patentansprüche

1. Kunststofffeder (1), umfassend einen Wellrohrkörper (3) mit endseitigen Anschlussflächen (5; 7) zur Kraftübertragung zwischen zwei relativ zueinander beweglichen Bauteilen (9; 11),
**dadurch gekennzeichnet,**
**dass** eine Anschlussfläche (5) der Kunststofffeder (1) als ein Rohrkörper ausgeführt ist, der in einen Topfelement (17) eines der tragenden Bauteilen eingreift, wobei das Topfelement (17) mit einer Verdrängermasse füllbar ist und **dadurch** der Rohrkörper (5) innerhalb des Topfelements (17) eine Verschiebebewegung zur axialen Einstellung der Vorspannung der Kunststofffeder (1) ausführt.

2. Kunststofffeder nach Anspruch 1,
**dadurch gekennzeichnet,**
**dass** der Rohrkörper (5) einteilig mit dem Wellrohrkörper (3) ausgeführt ist.

3. Kunststofffeder nach Anspruch 1,
**dadurch gekennzeichnet,**
**dass** das Topfelement (17) Bestandteil eines äußeren Zylinders (15) eines Federbeins ist, wobei der Zylinder (15) ebenfalls aus Kunststoff besteht.

4. Kunststofffeder nach dem Oberbegriff von Anspruch 1,
**dadurch gekennzeichnet,**
**dass** die Kunststofffeder (1) eine axial verlaufende Faserarmierung (16) aufweist, deren Faserlänge im Wesentlichen dem axialen Abstand zwischen den Anschlussflächen (3; 5) entspricht.

5. Kunststofffeder nach Anspruch 4,
**dadurch gekennzeichnet,**
**dass** zumindest ein Anteil von 50% der axial verlaufenden Fasern (16) eine Winkelabweichung von weniger als 30° zur Längsachse der Kunststofffeder (1) aufweist.

6. Kunststofffeder nach Anspruch 4,
**dadurch gekennzeichnet,**
**dass** die Kunststofffeder (1) eine in Umfangsrichtung verlaufende Faserarmierung (18) aufweist, wobei die Faserlänge zumindest dem Windungsdurchmesser des Wellrohrkörpers (3) entspricht.

7. Kunststofffeder nach Anspruch 4,
**dadurch gekennzeichnet,**
**dass** die Faserarmierung (16; 18) von einem Gewebe gebildet wird.

8. Kunststofffeder nach dem Oberbegriff von Anspruch 1,
**dadurch gekennzeichnet,**
**dass** die eine Anschlussfläche (7) als ein Axiallager 27 ausgeführt ist.

9. Kunststofffeder nach Anspruch 8,
**dadurch gekennzeichnet,**
**dass** die Anschlussfläche (7) eine Ringnut (29) zur Aufnahme eines Lagerrings (31) aufweist.

10. Kunststofffeder nach Anspruch 8,
**dadurch gekennzeichnet,**
**dass** die Anschlussfläche (7) eine Rollenlagerung aufweist.

11. Kunststofffeder nach Anspruch 9,
**dadurch gekennzeichnet,**
**dass** die Ringnut (29) eine Schmierstofffüllung aufweist.

12. Kunststofffeder nach Anspruch 8,
**dadurch gekennzeichnet,**
**dass** die Anschlussfläche (7) einen Rastmechanismus (30) zur Befestigung mit einem der zueinander beweglichen Bauteile (11) aufweist.

13. Kunststofffeder nach dem Oberbegriff von Anspruch 1,
**dadurch gekennzeichnet,**
**dass** die Kunststofffeder (1) mindestens eine Belüftungsöffnung (33) aufweist, die von einem Rückschlagventil (35) gesteuert wird.

14. Kunststofffeder nach Anspruch 13,
**dadurch gekennzeichnet,**
**dass** das Rückschlagventil (35) von einem elastischen Ventilkörper (37) gebildet wird, der in einer Falte des Wellrohrkörpers (3) gelagert ist.

15. Kunststofffeder nach Anspruch 14,
**dadurch gekennzeichnet,**
**dass** die Belüftungsöffnung (33) in einer Falte des Wellrohrkörpers (3) ausgeführt ist.

16. Kunststofffeder nach Anspruch 14,
**dadurch gekennzeichnet,**
**dass** der Ventilkörper (37) eine Rinnenform aufweist, die sich mit ihrem Nutgrund (39) in der Falte abstützt.

17. Kunststofffeder nach dem Oberbegriff von Anspruch 1,
**dadurch gekennzeichnet,**
**dass** ein Schwingungsdämpfer (13) als eine Patrone innerhalb des Zylinders (15) angeordnet ist und zwischen einem Außenzylinder (46) der Patrone und der Innenwandung des Zylinders (1) mindestens ein Ventilationskanal (45) vorliegt, der an einen Innenraum (47) der Kunststofffeder 1 angeschlossen ist.

18. Kunststofffeder nach Anspruch 17,
**dadurch gekennzeichnet,**
**dass** der Ventilationskanal (45) mindestens eine Anschlussöffnung (49) an die Umgebung des Zylinders (15) aufweist.

19. Kunststofffeder nach dem Oberbegriff von Anspruch 1,
**dadurch gekennzeichnet,**
**dass** die Kunststofffeder (1) im Betriebszustand der Blocklänge einen Drosselquerschnitt (51) zwischen mindestens zwei benachbarten Falten des Wellrohrkörpers (3) bildet.

20. Kunststofffeder nach Anspruch 19,
**dadurch gekennzeichnet,**
**dass** in der Wandung des Wellrohrkörpers mindestens eine Nut (53) ausgeführt ist, die zumindest einen Restquerschnitt zwischen einem von einer Falte eingeschlossenen Volumen und einem außerhalb der besagten Falte befindlichen Bereich bestimmt.

21. Kunststofffeder nach Anspruch 19,
**dadurch gekennzeichnet,**
**dass** die Nut (53) bei entspannter Kunststofffeder im Wesentlichen parallel zur Längsachse verläuft.

22. Kunststofffeder nach Anspruch 21,
**dadurch gekennzeichnet,**
**dass** das die mindestens eine Nut (53) an der Innen- und/oder Außenwandung des Wellrohrkörpers 3 ausgeführt ist.
